(19) Europäisches Patentamt
European Patent Office
Office européen des brevets

(11) **EP 3 550 507 A1**

(12) **EUROPÄISCHE PATENTANMELDUNG**

(43) Veröffentlichungstag:
**09.10.2019 Patentblatt 2019/41**

(51) Int Cl.:
*G06T 5/00* (2006.01)    *G06T 5/50* (2006.01)

(21) Anmeldenummer: **18166068.9**

(22) Anmeldetag: **06.04.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Healthcare GmbH**
**91052 Erlangen (DE)**

(72) Erfinder:
• **Baer, Matthias**
  **91054 Erlangen (DE)**
• **Stierstorfer, Karl**
  **91052 Erlangen (DE)**

(54) **KANTENERHALTENDE, ADAPTIVE FILTERUNG VON BILDDATEN**

(57) Die Erfindung betrifft ein Verfahren zur Erzeugung eines gefilterten Ergebnisbildes einer interessierenden Körperregion eines Untersuchungsobjektes basierend auf einem mittels medizinischer Bildgebungsmodalität erfassten ersten Rohbild. Das erste Rohbild wird zu einem ersten Zeitpunkt innerhalb einer Untersuchung des Untersuchungsobjektes erfasst, wobei während der Untersuchung wenigstens zwei Rohbilder erfasst werden. Das Verfahren umfasst folgende Schritte:
- Berechnen eines Differenzbildes aus dem ersten und einem innerhalb der Untersuchung direkt benachbart zu dem ersten Rohbild erfassten zweiten Rohbild, wobei die Rohbilder jeweils zuvor kantenerhaltend gefiltert werden,
- Identifizieren wenigstens eines Bildbereichs des Differenzbildes aufweisend einen Signalwert oberhalb eines vorab definierten Schwellwertes,
- Identifizieren wenigstens eines Bildbereichs des Differenzbildes aufweisend einen Signalwert unterhalb des Schwellwertes,
- Erzeugen des gefilterten Ergebnisbildes durch bereichsweise Mittelung des Signalwerts des ersten Rohbildes mit einem zweiten Signalwert basierend auf anderen, im Rahmen der Untersuchung erfassten Rohbilden, wobei die Mittelung den Signalwert des ersten Rohbildes für den Bildbereich mit Signalwert unterhalb des Schwellwertes gegenüber dem zweiten Signalwert unterdrückt und für den Bildbereich mit Signalwert oberhalb des Schwellwerts gegenüber dem zweiten Signalwert verstärkt.

FIG 4

**Beschreibung**

In der Fluoroskopie, insbesondere der Computertomographie (CT)-Fluoroskopie, werden zu verschiedenen Zeitpunkten innerhalb einer Untersuchung CT-Bilder bzw. CT-ähnliche Bilder eines Patienten rekonstruiert. Anwendungen für die CT-Fluoroskopie sind zum Beispiel die Untersuchung zeitlicher, physiologischer Abläufe wie Perfusion, Atmung, Organbewegung, insbesondere des Herzens, aber auch die Lagekontrolle von Interventionsmaterialien, z.B. bei Biopsien oder die Lage- und/oder Funktionskontrolle von Implantaten, z.B. einem Hüftgelenk. Im Gegensatz zur Standard-CT, bei der nur ein Bild des Patienten zu einem Zeitpunkt rekonstruiert wird, ist die Patientendosis bei den Fluoroskopie-Verfahren typischer Weise deutlich erhöht. Um eine akzeptable Bildqualität für die einzelnen Rekonstruktionen (Time Frames) zu den verschiedenen Zeitpunkten einer CT-Fluoroskopie-Untersuchung zu erreichen, muss oft für jeden Time Frame eine Dosis wie für einen Einzel-CT-Scan appliziert werden. Werden während einer Biopsie z.B. 30 CT-Fluoroskopie-Bilder des Patienten aufgenommen, so ist die applizierte Dosis um einen Faktor 30 höher als bei einer Standard-CT-Untersuchung umfassend nur ein Bild.

Verringert man die Gesamtdosis von CT-Fluoroskopie-Verfahren auf das Level von Standard-CT-Untersuchungen, besteht die Gefahr, dass sich das Rauschen in den einzelnen Time Frames bis zu einer klinisch inakzeptablen Bildqualität erhöht.

Ein bekannter Ansatz, die Dosis für Fluoroskopie-Untersuchungen zu verringern, ist eine kantenerhaltende Filterung in Zeit- und Raumrichtung, wie sie bspw. in A. Mendrik, E-J Vonken, J-W Dankbaar, M. Prokop, B. v. Ginneken: "Noise Filtering in Thin Slice 4D Cerebral CT Perfusion Scans" (Proc. SPIE Vol. 7623, pp 76230N-2, (2010) oder S. Sawall, F. Bergner, R. Lapp, M. Mronz, M. Karolzak, A. Hess, M. Kachelrieß: "Low-Dose Cardio-Respiratory Phasecorrelated Cone-Beam Micro-CT of Small Animals" (Med. Phys. 38, pp 1416, (2011)) beschrieben wird. Hier wird ein vierdimensionaler (entsprechend drei Raumdimensionen und der Zeit), kantenerhaltender Filter angewendet. Grundlage bilden Einzelbilder bzw. Rekonstruktionen (Time Frames) der CT-Untersuchung zu verschiedenen Zeiten t. Durch die kantenerhaltende Filterung kann das Rauschen in den einzelnen Time Frames unter Beibehaltung derselben Ortsauflösung reduziert werden. Mit anderen Worten kann durch die beschriebene Filterung entweder unter Beibehaltung der applizierten Dosis das Rauschen der einzelnen Time Frames oder die Dosis im Vergleich zu ungefilterten Time Frames reduziert werden, ohne dabei die Bildqualität in Bezug auf das Bildrauschen zu beeinträchtigen.

Neben der kantenerhaltenden Filterung der einzelnen Time Frames existieren auch iterative Rekonstruktionsmethoden, wie z.B. L. Ritsch, S. Sawall, M. Knaup, A. Hess, M. Kachelrieß: "Iterative 4D Cardiac Micro-CT Image Reconstruction Using an Adaptive Spatio-Temporal Sparsity Prior" (Phys. Med. Biol. 57, pp 1517, (2012)). Diese Rekonstruktionen zielen ebenfalls darauf ab, die Dosis von 4D CT-Untersuchungen zu verringern. Hierbei wird mit Hilfe von Regularisierungstermen das Bildrauschen in den einzelnen Time Frames reduziert. Die Reduktion des Rauschens durch den Rekonstruktionsalgorithmus kann dann, wie bei den oben beschriebenen Filtermethoden, dazu verwendet werden die Dosis im Vergleich zu einer nicht iterativen Rekonstruktion ohne Regularisierung bei gleichzeitiger Erhaltung der Bildqualität in Bezug auf das Bildrauschen zu verringern.

Die bekannten, filterbasierten und iterativen Methoden mit Regularisierung setzen den Abschluss der vollständigen CT-Untersuchung, also das Vorhandensein aller Time Frames der Untersuchung, voraus, damit rauschreduzierte Time Frames erzeugt werden können. Das bedeutet, die Algorithmen können erst nach der Erfassung aller Time Frames angewendet werden. Beide Methoden schließen folglich eine Echtzeitrekonstruktion von rauschreduzierten Time Frames, wie sie z.B. für die Lagekontrolle von Interventionsmaterialien während einer Intervention nötig wäre, aus.

Die iterativen Methoden mit Regularisierung erfordern zudem einen deutlich höheren Rechenaufwand mit entsprechender Rechenzeit gegenüber filterbasierten Methoden.

Eine weitere bekannte Vorgehensweise, die vor allem in der interventionellen CT-Bildgebung Anwendung findet, ist in B. Flach, J. Kuntz, M. Brehm, R. Kueres, S. Bartling, and M. Kachelrieß: "Low Dose Tomographie Fluoroscopy: 4D Intervention Guidance With Running Prior" (Med. Phys. 40, pp. 101909, (2013)) beschrieben. Diese nutzt zur Dosisreduzierung aus, dass während einer Intervention (z.B. Biopsie) auftretende Veränderungen zwischen den Time Frames zur gesamten Bildinformation, relativ klein sind. Das Interventionsmaterial, das während der Intervention durch den Arzt in den Patienten eingeführt und bewegt wird, besteht oft nur in einer axialen Rekonstruktion aus wenigen Pixeln. Unter der Annahme, dass sich von Time Frame zu Time Frame nur die Position des Interventionsmaterials im Patienten verändert, kann die Dosis der 4D CT-Untersuchung verringert werden, indem im Anschluss an einen ersten, normalen CT-Scan mit voller Anzahl an Projektionen die Anzahl der Projektionen für die CT-Scans der folgenden Time Frames deutlich reduziert wird, was die Dosis insgesamt verringert. Zur Rekonstruktion der Bewegung des Interventionsmaterials (z.B. Biopsienadel) reichen die wenigen Projektionen aus. Auch diese Methode erfordert große Rechenleistung und ist zudem, da optimiert auf die Anwendung in Zusammenhang mit Interventionen, nicht ohne weiteres auf andere Fluoroskopie-Anwendungen übertragbar.

Demgegenüber ist es Aufgabe der vorliegenden Erfindung, alternative Mittel bereit zu stellen, die es erlauben, flexibel und schnell, insbesondere schon während einer Untersuchung bzw. einer Bilddatenerfassung zuverlässig und reproduzierbar das Rauschniveau der erfassten Bilddaten ohne Erhöhung der applizierten Dosis zu verringern.

Diese Aufgabe wird gelöst durch ein Verfahren zur Erzeugung eines gefilterten Ergebnisbildes einer interessierenden Körperregion eines Untersuchungsobjektes, entsprechende Recheneinheit und medizinische Bildgebungsmodalität, entsprechendes Computerprogramm und entsprechenden computerlesbaren Datenträger gemäß den unabhängigen Ansprüchen. Bevorzugte und/oder alternative, vorteilhafte Ausgestaltungsvarianten sind Gegenstand der abhängigen Ansprüche.

Nachstehend wird die erfindungsgemäße Lösung der Aufgabe in Bezug auf das beanspruchte Verfahren als auch in Bezug auf die beanspruchten Vorrichtungen beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können gegenständliche Ansprüche (die beispielsweise auf ein Verfahren gerichtet sind) auch mit Merkmalen, die in Zusammenhang mit einer der Vorrichtungen beschrieben oder beansprucht sind, weitergebildet sein. Die entsprechenden funktionalen Merkmale des Verfahrens werden dabei durch entsprechende gegenständliche Module oder Einheiten ausgebildet.

Die vorliegende Erfindung betrifft in einem ersten Aspekt ein Verfahren zur Erzeugung eines gefilterten Ergebnisbildes einer interessierenden Körperregion eines Untersuchungsobjektes basierend auf einem mittels medizinischer Bildgebungsmodalität erfassten ersten Rohbild. Das erste Rohbild wird zu einem ersten Zeitpunkt innerhalb einer Untersuchung des Untersuchungsobjektes erfasst. Während der Untersuchung werden insgesamt wenigstens zwei Rohbilder erfasst. In der Regel werden mehr als zwei, also eine Vielzahl von Rohbildern erfasst, bspw. 30 oder mehr Rohbilder. Die Rohbilder werden in einer Ausführung zeitlich voneinander beabstandet erfasst. In einer alternativen Ausführung werden die Rohbilder gleichzeitig oder im Wesentlichen gleichzeitig erfasst. Die Anzahl der Rohbilder sowie ggf. deren zeitlicher Abstand richten sich nach der Art der Untersuchung. Der zeitliche Abstand der Rohbilderfassung kann über die Dauer der Untersuchung äquidistant, aber auch variabel sein. Der zeitliche Abstand der Rohbilderfassung kann insbesondere durch bestimmte Körperfunktionen wie Atmung oder Herzrhythmus vorgegeben sein.

Ein Rohbild im Sinne der Erfindung entspricht einem Einzelbild bzw. Time Frame. Dieses Rohbild wird aus einer Bildgebungsmodalität bzw. Akquise-Technik entsprechenden Messdaten auf an sich bekannte Weise rekonstruiert. Mit anderen Worten wird das erfindungsgemäße Verfahren im Bildraum ausgeführt. Das Rohbild kann als zwei- oder dreidimensionales Bild ausgebildet sein, wobei das Rohbild eine Vielzahl von matrixartig angeordneten Bildelementen mit jeweiligen Signaleinträgen bzw. Signalwerten umfasst. Ein Bildelement kann bspw. als Pixel oder Voxel ausgebildet sein.

Ein gefiltertes Ergebnisbild entspricht in Struktur bzw. Aufbau einem Rohbild, wobei die Bildinformation des gefilterten Ergebnisbildes im Gegensatz zum Rohbild erfindungsgemäß korrigiert wurde.

Rohbild sowie gefiltertes Ergebnisbild umfassen erfindungsgemäß Bildinformation bezüglich einer interessierenden Körperregion eines Untersuchungsobjektes. Ein Untersuchungsobjekt kann ein Patient sein, wobei es sich meist um einen Menschen handelt. Grundsätzlich kann der Patient auch ein Tier sein. Die beiden Begriffe "Untersuchungsobjekt" und "Patient" werden im Folgenden synonym verwendet. Das Untersuchungsobjekt kann alternativ eine Pflanze oder ein nicht-lebender Gegenstand, z.B. ein historisches Artefakt oder dergleichen sein.

Die interessierende Körperregion beschreibt den Teil, Bereich oder Teilbereich bzw. die Region des Untersuchungsobjektes, der mittels Bildgebungsmodalität untersucht werden soll. Sie ergibt sich bspw. aus einer medizinischen Fragestellung, die sich aus einem Anfangsverdacht aufgrund auftretender Beschwerden beim Untersuchungsobjekt ableiten lässt. Die interessierende Körperregion kann bspw. den Kopf, Thorax oder ein Bein eines Untersuchungsobjektes oder auch den gesamten Körper des Untersuchungsobjekts umfassen. Sowohl das Rohbild als auch das gefilterte Ergebnisbild stellen die interessierende Körperregion dar bzw. bilden diese ab.

Das erfindungsgemäße Verfahren umfasst eine Vielzahl von Schritten.

In einem ersten Schritt erfolgt ein Berechnen eines Differenzbildes aus dem ersten Rohbild und einem innerhalb der Untersuchung direkt benachbart zu dem ersten Rohbild erfassten zweiten Rohbild. Eine direkte Nachbarschaft von erstem und zweitem Rohbild im Sinne der Erfindung umfasst eine direkte räumliche und/oder zeitliche Nachbarschaft. Mit anderen Worten werden erstes und zweites Rohbild entweder direkt nacheinander im Verlauf der Untersuchung erfasst und/oder sie entsprechen zwei im Wesentlichen zeitgleich erfassten Aufnahmen mit einem der Untersuchung entsprechenden, kleinstmöglichen Versatz entlang einer Raumachse, bspw. der Z-Achse. Mit anderen Worten erfolgt eine Verrechnung zweier unmittelbar zeitlich und/oder räumlich nebeneinander liegender Rohbilder der Untersuchung. Das Differenzbild wird berechnet, indem Bildelement für Bildelement die Differenz zwischen den Signaleinträgen des ersten und des zweiten Rohbildes berechnet wird. Dabei kann entweder das erste oder das zweite Rohbild als Subtrahend dienen.

Dabei werden die beiden Rohbilder jeweils zuvor kantenerhaltend gefiltert. Eine kantenerhaltende Filterung bewirkt eine Glättung der Rohbilder in im Wesentlichen homogenen Bildbereichen, d.h. in Bildbereichen umfassend keine oder nur kleine bzw. geringe Schwankungen der Signaleinträge bzw. Signalwerte einzelner Bildelemente, bspw. innerhalb eines abgebildeten Objektes mit homogenen Abbildungseigenschaften, bspw. eines Organs oder dergleichen. In Bildbereichen, mit großen Schwankungen der Signalwerte von einzelnen Bildelementen, bspw. an einer Objektgrenze oder Objektkante, wie bspw. einer Organ- und Implantataußenfläche bewirkt die kantenerhaltende Filterung hingegen keine Glättung. Mit anderen Worten erhält eine kantenerhaltende Filterung die Bildinformation bzgl. dem Verlauf von bzw. Objektgrenzen oder Kanten in den Rohbildern.

In einem zweiten Schritt erfolgt ein Identifizieren wenigstens eines Bildbereichs des Differenzbildes aufweisend einen Signalwert oberhalb eines vorab definierten Schwellwertes. In einem dritten Schritt erfolgt ein Identifizieren wenigstens eines Bildbereichs des Differenzbildes aufweisend einen Signalwert unterhalb des Schwellwertes. Mit anderen Worten wird das Differenzbild in wenigstens zwei Bildbereiche mit je einem Signalwert ober- bzw. unterhalb des Schwellwerts, unterteilt. Der Schwellwert kann automatisch oder durch einen Benutzer, bspw. medizinisches Personal, vorgegeben werden und ebenfalls von der Art der Untersuchung bzw. der verwendeten Bildgebungsmodalität abhängig sein. Ein Signalwert bzw. ein Signaleintrag repräsentiert dabei die Intensität eines physikalischen Signals welches bei der Bilddatenerfassung entsprechend dem individuellen Bildelement ortsaufgelöst erfasst wurde, bspw. eine Röntgenstrahlung bei einer Computertomographie-Untersuchung oder eine Magnetfeldstärke bei einer MRT-Untersuchung. Die erfasste Intensität ist bevorzugt über Graustufen codiert.

Ein Bildbereich im Sinne der Erfindung umfasst wenigstens ein, bevorzugt jedoch eine Vielzahl von unterbrechungsfrei zusammenhängenden Bildelementen, wobei der Zusammenhang dadurch besteht, dass die Signaleinträge ober- bzw. unterhalb des Schwellwertes liegen. Der Signalwert umfasst folglich wenigstens einen, bevorzugt jedoch eine Vielzahl von Signaleinträgen bzw. Signalwerten einzelner Bildelemente. Bildbereiche mit Bildelementen, die allesamt dasselbe Kriterium erfüllen, jedoch nicht räumlich zusammenhängen, können alternativ auch als ein Bildbereich verstanden werden.

Es kann vorgesehen sein, dass mehrere Bildbereiche mit Signalwert unter- bzw. oberhalb identifiziert werden. In einer besonderen Ausführung der Erfindung kann vorgesehen sein, dass kein Bildelement mit Signalwert oberhalb des Schwellwertes identifiziert werden kann. In diesem Fall umfasst der entsprechende Bildbereich mit Signalwert oberhalb des Schwellwertes null Bildelemente.

In einer Ausführung der Erfindung erfolgt die Identifikation des wenigstens einen Bildbereichs, indem Bildelement für Bildelement der Signalwert mit dem Schwellwert verglichen wird.

In einem vierten Schritt des erfindungsgemäßen Verfahrens erfolgt ein Erzeugen des gefilterten Ergebnisbildes durch bereichsweise Mittelung des Signalwerts des ersten Rohbildes mit einem zweiten Signalwert basierend auf anderen, im Rahmen der Untersuchung erfassten Rohbildern. Insbesondere basiert der zweite Signalwert auf vor dem ersten Rohbild erfassten Rohbildern. Die anderen Rohbilder umfassen erfindungsgemäß wenigstens ein Rohbild, bevorzugt eine Vielzahl von Rohbildern und besonders bevorzugt alle anderen bzw. alle zeitlich vor dem ersten Rohbild erfassten Rohbilder der Untersuchung. Mit anderen Worten wird für jeden der zuvor identifizierten Bildbereiche die Bildinformation des ersten Rohbildes mit zusätzlicher Bildinformation aus der Untersuchung gemittelt. Diese zusätzliche Bildinformation für den jeweiligen Bildbereich wird aus wenigstens einem, bevorzugt aber einer Vielzahl von Rohbildern der Untersuchung gewonnen, die insbesondere zeitlich vor dem ersten Rohbild erfasst wurden. Die Vorschrift der bereichsweisen Mittelung richtet sich nach dem betrachteten Bildbereich. Für einen Bildbereich mit Signalwert unterhalb des Schwellwertes unterdrückt die Mittelung den Signalwert des ersten Rohbildes gegenüber dem zweiten Signalwert entsprechend der zusätzlichen Bildinformation. D.h. der erste Signalwert trägt nur geringfügig zu der Bildinformation des gefilterten Ergebnisbilds bei, wohingegen der zweite Signalwert die Bildinformation des Ergebnisbildes in diesem Bereich dominiert. Für den Bildbereich mit Signalwert oberhalb des Schwellwerts ist es umgekehrt, hier unterdrückt die Mittelung den zweiten zugunsten des ersten Signalwertes.

Die bereichsweise Mittelung der Signalwerte umfasst erfindungsgemäß für jeden Bildbereich eine Mittelung der Signaleinträge Bildelement für Bildelement.

Dieses Vorgehen beruht u.a. auf der Annahme, dass kleine Signaländerungen zwischen zwei in der Untersuchung direkt benachbart zu einander erfassten Rohbildern im Wesentlichen, das heißt zum überwiegenden Teil, durch Bildrauschen verursacht werden. Größere bzw. stärkere Unterschiede zwischen den Signalwerten benachbarter bzw. dicht bei einander liegender Bildelemente beruhen in der Annahme jedoch auf klinisch relevanten Informationen innerhalb der interessierenden Körperregion. Diese können bspw. durch Bewegung des Untersuchungsobjektes, Veränderungen von Kontrasten, eine Veränderung der Lage von Interventionsmaterial oder dergleichen, verursacht sein.

Durch die erfindungsgemäße Definition von Bildbereichen für das erste Rohbild anhand des Differenzbildes wird vorteilhaft klinisch relevante Information in dem ersten Rohbild identifiziert. Durch die kantenerhaltende Filterung der Rohbilder wird das Rauschniveau der Rohbilder gesenkt, ohne die klinisch relevante Information zu verfälschen. Denn der kantenerhaltende Filter wirkt nicht in Bildbereichen mit großen bzw. vergleichsweise größeren Signalwertunterschieden zwischen benachbarten bzw. eng bei einander liegenden Bildelementen. Infolge dessen läßt das Differenzbild anschließend eine klare Trennung zwischen Bildbereichen umfassend klinisch relevante Information und übrigen Bildbereichen zu. Die erfindungsgemäße Mittelung des Rohbildes mit zusätzlicher Bildinformation derselben Untersuchung sorgt vorteilhaft für eine Reduzierung des Bildrauschens, beeinträchtigt jedoch nicht bzw. nur unwesentlich die klinisch relevante Information des ersten Rohbildes.

Die Identifikation von Bereichen mit klinisch relevanter Information in einem Rohbild macht die Rauschreduzierung unabhängig von der Untersuchungsart bzw. der zugrunde liegenden medizinischen Fragestellung. Durch einen Anpassung des Schwellwertes an die konkrete Untersuchungsart kann das erfindungsgemäße Verfahren noch weiter verbessert werden.

Da das erfindungsgemäße Verfahren in bevorzugter Ausführung für die bereichsweise Mittelung nur auf Rohbilder der Untersuchung zurückgreift, die vor dem ersten Rohbild erfasst wurden, kann das gefilterte Ergebnisbild besonders schnell nach Erfassen des ersten Rohbildes bereitgestellt werden.

In einer ersten Ausführungsvariante der Erfindung basiert der Schwellwert auf einem lokalen Bildrauschen des ersten Rohbildes. Bevorzugt ergibt sich der Schwellwert als Produkt aus dem lokalen Bildrauschen und einem freien Skalierungsfaktor. Das lokale Bildrauschen bezieht sich bevorzugt auf ein Bildelement, also ein Pixel/Voxel bzw. wird für ein Bildelement ermittelt bzw. abgeschätzt. Das lokale Bildrauschen wird bevorzugt durch Auswertung der Standardabweichung entlang verschiedener Richtungen bzw. Bildelementreihen durch das betrachtete Bildelement ermittelt. Eine Richtung bzw. eine Bildelementreihe umfasst mindestens drei, alternativ auch mehr reihenartig angeordnete Bildelemente und immer auch das betrachtete Bildelement. Die verschiedenen Richtungen bzw. Bildelementreihen schneiden sich im Zentrum des betrachteten Bildelements. Die Bildelement in einer Reihe bzw. Richtung müssen nicht direkt benachbart sein, stattdessen können einzelne Bildelemente in einer Reihe bei Berechnung der Standardabweichung unberücksichtigt blieben, bspw. jedes zweite Bildelement der Reihe. In einer Ausführungsform wird das Minimum der so ermittelten Standardabweichungen für das betrachtete Bildelement als lokales Bildrauschen angenommen. Derart kann ein Einfluss von Objektkanten, die das lokale Bildrauschens verfälschen könnten, minimiert werden. Der Skalierungsfaktor ist dabei bevorzugt so ausgebildet, dass er die verwendete Bildgebungsmodalität, die Art der Untersuchung bzw. die initiale medizinische Fragestellung oder dergleichen berücksichtigt. Mit anderen Worten sorgt der Skalierungsfaktor für eine Anpassung des Schwellwertes an eine bestimmte Untersuchung. Der Skalierungsfaktor kann bspw. durch Benutzereingabe vorgegeben oder aus einer zuvor gespeicherten Tabelle entsprechend der genannten Vorgaben automatisch ausgewählt und eingelesen werden. Die letztgenannte Ausführung optimiert Bedienkomfort und Workflow.

In einer weiteren Ausführungsvariante der Erfindung ist die kantenerhaltende Filterung der Rohbilder als bilaterale Filterung ausgebildet. Eine bilaterale Filterung entspricht einer nichtlinearen Filterung über Signaleinträge von benachbarten Bildelementen hinweg, wobei sowohl der Abstand zwischen Bildelementen als auch die Abweichung von ggf. vorhandener Farbinformation bzw. Graustufen der jeweiligen Signaleinträge berücksichtigt und Objektkanten erhalten werden. Als Filterkerne können hier bspw. Gauß-Filter zum Einsatz kommen. Ein bilateraler Filter, wie er im Rahmen der Erfindung zum Einsatz kommen kann, ist bspw. in C. Tomasi and R. Manduchi: "Bilateral filtering for gray and color Images" (Proc. 6th Int. Conf. Computer Vision, p. 839-846, (1998)) beschrieben. Diese Art der Filterung macht das erfindungsgemäße Verfahren unabhängig von der eingesetzten Bildgebungsmodalität und erübrigt entsprechende Anpassungen.

In einer anderen Ausführungsvariante der Erfindung wird das Differenzbild vor dem Identifizieren wenigstens eines Bildbereiches gefiltert. Diese Vorgehensweise bewirkt vorteilhaft eine Reduzierung des Bildrauschens im Differenzbild. Hier kann ein beliebiger Glättungsfilter eingesetzt werden, insbesondere in Form eines Gauß- oder Mittelwertfilters.

In einer anderen Ausführungsvariante der Erfindung basiert die bereichsweise Mittelung zwischen erstem und zweitem Signalwert für den Bildbereich mit Signalwert unterhalb des Schwellwertes auf einem Mittelungsparameter, der entsprechend einer maximalen Rauschunterdrückung für den Bildbereich gewählt wird. Der Mittelungsparameter ist bevorzugt als freier Parameter ausgebildet, der die Bedingungen der Rohbilderfassung berücksichtigt. Der Mittelungsparameter kann insbesondere so gewählt werden, dass er die Bildgebungsmodalität, die Art der Untersuchung, bspw. Fluoroskopie, Perfusion oder dergleichen, die interessierende Körperregion, bspw. Kopf oder Thorax oder dergleichen, berücksichtigt. Der Mittelungsparameter kann insbesondere Werte zwischen 0 und 1 annehmen. Der Mittelungsparameter kann durch einen Benutzer per Eingabe vorgegeben werden oder automatisch aus einer Tabelle abgerufen bzw. eingelesen werden.

Für Bildbereiche mit Signalwert unterhalb des Schwellwertes nimmt die Erfindung an, dass die Veränderungen zwischen zwei zeitlich aufeinander folgenden bzw. direkt räumlich benachbarten Rohbildern im Wesentlichen durch das Bildrauschen bedingt sind. Anders ausgedrückt, sind Veränderungen in diesem Bereich so klein, dass sie im lokalen Rauschen untergehen. Diese Veränderungen sind folglich nicht klinisch relevant und können gemittelt werden. Der Mittelungsparameter für diesen Bereich wird dann so gewählt, dass das Rauschen in diesem Bereich minimiert, also der erste Signalwert gegenüber dem zweiten Signalwert unterdrückt wird. Mit anderen Worten geht für diesen Bereich der erste Signalwert zu einem vergleichsweise kleinen Anteil in das gefilterte Ergebnisbild ein.

In einer anderen Ausführungsvariante der Erfindung basiert die bereichsweise Mittelung zwischen erstem und zweitem Signalwert für den Bildbereich mit Signalwert oberhalb des Schwellwertes auf einem Produkt aus dem bereits beschriebenen Mittelungsparameter und einer Gewichtungsfunktion, wobei die Gewichtungsfunktion eine vom lokalen Bildrauschen des ersten Rohbildes abhängige Funktion ist.

Für Bildbereiche mit Signalwert oberhalb des Schwellwertes nimmt die Erfindung an, dass die Abweichungen zwischen zwei zeitlich aufeinander folgenden bzw. direkt benachbarten Rohbildern nicht bzw. nicht allein durch Bildrauschen bedingt und deshalb klinisch relevant sind. Bspw. können die Abweichungen durch Veränderungen in der Lage eines Objektes, Änderungen in der Kontrastmittelkonzentration oder dergleichen bedingt sein. Diese Veränderungen dürfen, um ihre Aussagekraft nicht zu verlieren, bei der Mittelung zur Senkung des Rauschniveaus nicht beeinträchtigt werden und gehen daher erfindungsgemäß nur bedingt in die Mittelung ein bzw. sind ganz von ihr ausgeschlossen. Dies wird erfindungsgemäß mittels Gewichtungsfunktion sichergestellt, die durch Multiplikation mit dem Mittelungsparameter den Beitrag des zweiten Signalwertes am Ergebnisbild gegenüber dem ersten Signalwert reduziert. Die Gewichtungsfunktion kann Werte zwischen 0 und 1 annehmen.

In einer bevorzugten Ausführungsvariante der Erfindung wird der zweite Signalwert durch Mittelung von Signalwerten zeitlich und/oder räumlich vor dem ersten Rohbild erfasster Rohbilder der Untersuchung gebildet. Mit anderen Worten umfasst der zweite Signalwert in einer Ausführungsform Bildinformation von wenigstens einem und bevorzugt einer Vielzahl von zeitlich vor dem ersten Rohbild erfassten Rohbildern der Untersuchung. In einer anderen Ausführungsform umfasst der zweite Signalwert Bildinformation von wenigstens einem und bevorzugt einer Vielzahl von räumlich vor dem ersten Rohbild erfassten bzw. liegenden Rohbildern der Untersuchung. Das bedeutet, dass Rohbilder, die bspw. in einer Richtung entlang einer Raumachse zum ersten Rohbild versetzt sind, zum zweiten Signalwert beitragen. Besonders bevorzugt wird der zweite Signalwert durch bereichsweise Mittelung von Signalwerten aller vor dem ersten Rohbild erfassten bzw. liegenden Rohbilder der Untersuchung gebildet, wenigstens wird hier jedoch das direkt benachbart erfasste Rohbild berücksichtigt. Eine hohe Anzahl von Rohbildern, die zur Bildung des zweiten Signalwertes beitragen führt zu einer optimalen Homogenisierung der Bildinformation in diesem Bildbereich. Gehen mehr Bilder in die Mittelung ein, sinkt das Bildrauschen deutlich gegenüber einer Berücksichtigung von nur einem zusätzlichen Rohbild. Diese Ausführung der Erfindung bewirkt also eine besonders gute Rauschunterdrückung für Bildbereiche mit Signalwert unterhalb des Schwellwertes.

In einer anderen, besonders bevorzugten Ausführungsvariante der Erfindung wird das Verfahren iterativ für jedes erfasste erste Rohbild der Untersuchung durchgeführt. Mit anderen Worten erfolgt erfindungsgemäß eine Berechnung eines Ergebnisbildes für jedes im Rahmen der Untersuchung erfasste Rohbild. Dies ermöglicht vorteilhaft eine Erzeugung eines Ergebnisbildes zu jedem Rohbild innerhalb der Untersuchung. Idealerweise erfolgt in einer bevorzugten Ausführung die Erzeugung eines Ergebnisbildes zu einem Rohbild innerhalb eines Zeitschritts der Untersuchung, also vor der bzw. zeitgleich zur Erfassung eines nächsten Rohbildes. Derart können klinisch relevante Veränderungen im Untersuchungsobjekt während der Untersuchung parallel zur Bilddatenerfassung mit hoher Bildqualität durch einen Benutzer überwacht werden.

In einer weiteren, besonders bevorzugten Ausführungsvariante der Erfindung wird bei der bereichsweisen Mittelung der k-ten Iteration der zweite Signalwert basierend auf dem gefilterten Ergebnisbild der (k-1)-ten Iteration gebildet. Diese Vorgehensweise basiert auf der Überlegung, dass das Ergebnisbild des vorherigen Zeitschritts der Untersuchung, welches erfindungsgemäß berechnet wurde, die Bildinformation aller zuvor erfassten Rohbilder der Untersuchung bereits optimal berücksichtigt. Damit wird die Berechnung eines weiteren, k-ten Ergebnisbildes besonders einfach und damit schnell, insbesondere so schnell, dass ein rausch-optimiertes Ergebnisbild innerhalb eines jeden Zeitschritts der Bilddatenerfassung bereitgestellt werden kann.

In einer anderen, optionalen Ausführungsvariante der Erfindung wird beim Erzeugen des gefilterten Ergebnisbildes für den wenigstens einen Bildbereich mit Signalwert oberhalb des Schwellwerts das erste Rohbild vor der bereichsweisen Mittelung der Signalwerte kantenerhaltend gefiltert. Diese kantenerhaltende Filterung des ersten Rohbildes sorgt vorteilhaft für eine Angleichung der Rauschniveaus von erstem Rohbild und gefiltertem Ergebnisbild des vorherigen Zeitschritts bzw. der vorherigen Iteration, ohne dabei Information bezüglich des Verlaufs von Objektkanten zu verlieren. Für den hier eingesetzten kantenerhaltenden Filter gilt grundsätzlich die obige Beschreibung. Jedoch muss die Parametrierung des Filters nicht notwendigerweise derjenigen entsprechen, die bei der Berechnung des Differenzbildes angewendet wurde.

In einer weiteren Ausführungsvariante der der Erfindung ist die Untersuchung eine aus der Gruppe der folgenden Untersuchungen: vierdimensionale CT-Fluoroskopie, CT-Perfusionsuntersuchung, dreidimensionale Volumen-CT, vierdimensionale Herz-/Thoraxbildgebung oder dergleichen. Weitere beliebige Untersuchungsarten sind ebenfalls denkbar und im Sinne der Erfindung, bspw. Magnetresonanz-Untersuchungen.

In einem zweiten Aspekt betrifft die Erfindung eine Recheneinheit zur Erzeugung eines gefilterten Ergebnisbildes einer interessierenden Körperregion eines Untersuchungsobjektes basierend auf einem mittels medizinischer Bildgebungsmodalität erfassten ersten Rohbild, aufweisend Mittel zum Durchführen des erfindungsgemäßen Verfahrens.

Die Erfindung betrifft in einem weiteren Aspekt auch eine medizinische Bildgebungsmodalität mit einer erfindungsgemäßen Recheneinheit. Vorteilhaft ist die Recheneinheit in die medizinische Bildgebungsanlage integriert. Alternativ kann die Recheneinheit auch entfernt bzw. abgelegen angeordnet sein. Die Recheneinheit kann ausgebildet sein, insbesondere den Schritt des Erzeugens eines gefilterten Ergebnisbildes, aber auch das gesamte erfindungsgemäße Verfahren, für eine medizinische Bildgebungsmodalität oder für eine Vielzahl von Anlagen durchzuführen, z.B. in einem Radiologie-Zentrum oder Krankenhaus umfassend mehrere Anlagen. Die erfindungsgemäße Bildgebungsmodalität kann bspw. als Computertomographie-, C-Bogen-, Röntgen-, Magnetresonanztomographie-Anlage oder dergleichen ausgebildet sein.

Die Erfindung betrifft in einem weiteren Aspekt ein Computerprogramm mit Programmcode, um das anspruchsgemäße Verfahren zur Erzeugung eines gefilterten Ergebnisbildes einer interessierenden Körperregion eines Untersuchungsobjektes basierend auf einem mittels medizinischer Bildgebungsmodalität erfassten ersten Rohbild durchzuführen, wenn das Computerprogramm auf einem Computer ausgeführt wird.

Die Erfindung betrifft in einem weiteren Aspekt einen computerlesbaren Datenträger mit Programmcode eines Computerprogramms, um das erfindungsgemäße Verfahren zur Erzeugung eines gefilterten Ergebnisbildes einer interessierenden Körperregion eines Untersuchungsobjektes basierend auf einem mittels medizinischer Bildgebungsmodalität erfassten ersten Rohbild durchzuführen, wenn das Computerprogramm auf einem Computer ausgeführt wird. Vorteilhaft kann insbesondere das Erzeugen eines gefilterten Ergebnisbildes auf einem Computer, beispielsweise in einer Recheneinheit einer medizinischen Bildgebungsanlage, ausgeführt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Durch diese Beschreibung erfolgt keine Beschränkung der Erfindung auf diese Ausführungsbeispiele. In verschiedenen Figuren sind gleiche Komponenten mit identischen Bezugszeichen versehen. Die Figuren sind in der Regel nicht maßstäblich. Es zeigen:

FIG 1    eine schematische Darstellung des erfindungsgemäßen Verfahrens gemäß einem Ausführungsbeispiel der vorliegenden Erfindung,

FIG 2    eine schematische Darstellung des erfindungsgemäßen Verfahrens gemäß einem anderen Ausführungsbeispiel der Erfindung,

FIG 3    eine schematische Darstellung des erfindungsgemäßen Verfahrens gemäß einem weiteren Ausführungsbeispiel der Erfindung,

FIG 4    eine Ansicht des erfindungsgemäßen Verfahren gemäß dem Ausführungsbeispiel von Figur 3,

FIG 5    eine Gegenüberstellung der theoretischen Rauschreduktion in Abhängigkeit des erfindungsgemäßen Mittelungsparameters w und der Anzahl Rohbilder gemäß der Erfindung,

FIG 6    eine Gegenüberstellung eines initialen Rohbildes und einem erfindungsgemäß daraus berechneten gefilterten Ergebnisbild, und

FIG 7    eine Ansicht einer medizinischen Bildgebungsmodalität in Form eines Computertomographen (CT) gemäß einer Ausführungsform der Erfindung umfassend eine erfindungsgemäße Recheneinheit.

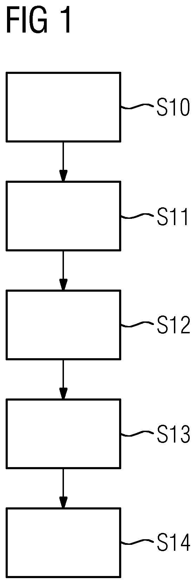

**Figur** 1 zeigt eine schematische Darstellung eines Ausführungsbeispiels des erfindungsgemäßen Verfahrens. Ausgangspunkt sei das Vorhandensein von wenigstens zwei, bevorzugt einer Vielzahl von zu einer medizinischen Untersuchung mittels Bildgebungsanlage gehörigen Rohbildern. Eine Untersuchung umfasse hier einen bestimmten Bilddatenerfassungsprozess, bspw. eine CT-Fluoroskopie. Die Rohbilder können einen zeitlichen und/oder räumlichen Versatz entsprechend der Untersuchung und/oder der Bildgebungsmodalität zu einander aufweisen. In einem ersten Schritt S10 erfolgt eine Filterung von zwei direkt benachbarten Rohbildern, also von zwei Rohbildern, die zeitlich und/oder räumlich direkt aufeinander folgen bzw. nebeneinander liegen. Bei der Filterung wird ein kantenerhaltender Filter eingesetzt. Dieser bewirkt eine Glättung der Bildinformation in homogeneren Bereichen, wobei Kanten, bspw. entlang von Objektgrenzen unverändert bleiben. Dies bewirkt eine Hervorhebung der Objektkanten in den Rohbildern gegenüber der restlichen Bildinformation. Bevorzugt wird auf beide Rohbilder ein und derselbe Filter angewendet bzw. dieselbe Parametrierung des Filters gewählt. Der kantenerhaltende Filter ist bevorzugt als bilateraler Filter ausgebildet. In einem Schritt S11 wird aus den beiden gefilterten Rohbildern ein Differenzbild berechnet. Dieser Schritt umfasst eine Differenzbildung der Signaleinträge bzw. Signalwerte für jedes Bildelement der beiden Rohbilder. Entsprechend repräsentiert das Differenzbild die Unterschiede zwischen den beiden Rohbildern auf Basis der einzelnen Bildelemente. Dort in den Bildern, wo keine oder lediglich Unterschiede im Rahmen des Bildrauschens aufgetreten sind, sollten die Signaleinträge des Differenzbildes nur unwesentlich von null abweichen. Anders dort, wo sich Veränderungen zwischen erstem und zweitem Rohbild ergeben haben, bspw. durch Patientenbewegung, durch Konzentrationsveränderung eines Kontrastmittels, durch Verschiebung eines Interventionsinstrumentes oder dergleichen: dort zeigt das Differenzbild höhere Signaleinträge entsprechend der Stärke der Änderung. In weiteren Schritten S12 und S13 erfolgt jeweils ein Identifizieren wenigstens eines Bildbereichs, wobei einerseits ein Bildbereich mit Signalwert oberhalb eines Schwellwertes und andererseits ein Bildbereich mit Signalwert unterhalb des Schwellwerts identifiziert wird. Die Schritte S12 und S13 können in beliebiger Reihenfolge sowie jeweils mehrfach hintereinander ausgeführt werden, bspw. solange, bis alle Bildbereiche identifiziert sind. Mit anderen Worten wird in den Schritten S12 und S13 jedes Bildelement einem Bildbereich zugeordnet, und zwar basierend auf einem Vergleich des individuellen Signaleintrags und einem Schwellwert. Ein Bildbereich umfasst folglich wenigstens ein Bildelement, regelmäßig jedoch eine Vielzahl von zusammenhängenden Bildelementen, die allesamt den Schwellwert unter- bzw. überschreiten. Die Bereichsbestimmung erfolgt anhand des Differenzbildes. Im Folgenden des erfindungsgemäßen Verfahrens wird die Bereichseinteilung jedoch auch wenigstens auf das erste Rohbild, besonders bevorzugt auf eine Vielzahl von Rohbildern, übertragen. Der Schwellwert an sich ist vorgegeben bzw.

vorab festgelegt. Sein Wert basiert auf dem lokalen Bildrauschen des ersten Rohbildes. Der Schwellwert berücksichtigt bevorzugt auch die Untersuchungsart und/oder die verwendete Bildgebungsmodalität. In einem weiteren Verfahrensschritt S14 wird ein gefiltertes Ergebnisbild erzeugt. Dazu erfolgt eine bereichsweise Mittelung von Signalwerten. Mit anderen Worten wird für jeden der zuvor ermittelten Bildbereiche, nun bezogen auf das erste Rohbild, der Signalwert des ersten Rohbildes mit einem anderen, zweiten Signalwert gemittelt. Die Mittelung erfolgt ebenfalls Bildelement für Bildelement. Der zweite Signalwert basiert auf anderen Rohbildern, die im Rahmen der Untersuchung erfasst wurden. Insbesondere ergibt sich der zweite Signalwert basierend auf nur einem weiteren Rohbild, bspw. dann, wenn die Untersuchung insgesamt nur zwei Rohbilder liefert. Bevorzugt basiert der zweite Signalwert jedoch auf einer Vielzahl und besonders bevorzugt auf einer maximal möglichen Anzahl von anderen Rohbildern der Untersuchung. Diese wurden vorteilhaft vor dem ersten Rohbild erfasst. Der zweite Signalwert kann bspw. als Bildelement-weiser Mittelwert über die Vielzahl der anderen Rohbilder gebildet werden. Dabei können die einzelnen Pixeleinträge jeweils gelichgewichtet in die Mittelung eingehen oder aber nach einer bestimmten, weiter unten beschriebenen Mittelungsvorschrift berücksichtigt werden.

Die Mittelung unterscheidet Bildbereiche mit Signalwert oberhalb und unterhalb des Schwellwerts. In Bereichen mit Signalwert unterhalb des Schwellwerts wird der erste Signalwert, also der des ersten Rohbildes gegenüber dem zweiten Signalwert unterdrückt. In einem Bildbereich mit Signalwert oberhalb des Schwellwertes wird der erste Signalwert gegenüber dem zweiten Signalwert verstärkt. Mit anderen Worten geht im ersten Fall der erste Signalwert nur mit einem geringen Gewicht in die Mittelung ein, im zweiten Fall jedoch mit einem hohen Gewicht. In Bildbereichen mit grundsätzlich geringer Schwankungsbreite in Bezug auf die individuellen Signalwerte, also dort, wo sich zwischen den beiden Rohbildern keine klinisch relevanten Veränderungen ergeben haben, wird derart das Rauschniveau gesenkt. In Bereichen mit großer Schwankungsbreite und demzufolge klinisch relevantem Informationsgehalt wird der zweite Signalwert jedoch nur bedingt berücksichtigt oder sogar vollständig unterdrückt und dadurch der Informationsgehalt beibehalten. Das gefilterte Ergebnisbild weist insgesamt unter Beibehaltung seiner Aussagekraft ein vermindertes Rauschniveau auf.

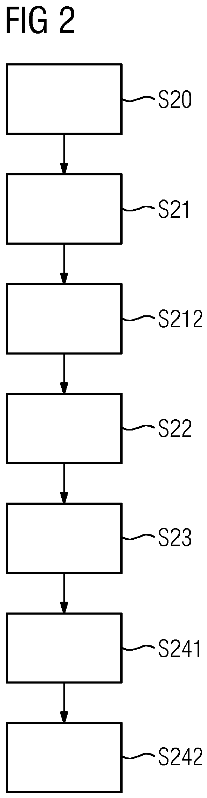

**Figur** 2 zeigt eine schematische Darstellung eines weiteren Ausführungsbeispiels des erfindungsgemäßen Verfahrens. Ausgangspunkt sei ebenfalls das Vorhandensein von wenigstens zwei, bevorzugt einer Vielzahl von zu einer medizinischen Untersuchung mittels Bildgebungsanlage gehörigen Rohbildern. Die Schritte S20 und S21 umfassen eine kantenerhaltende Filterung zweier Rohbilder sowie die Berechnung eines Differenzbildes aus denselben entsprechend den bereits mit Bezug zu Figur 1 erläuterten Schritten S10 und S11. In Schritt S212 erfolgt in dieser Ausführung zusätzlich eine Filterung des Differenzbildes. Diese dient dazu, durch räumliche Homogenisierung das Rauschniveau im Differenzbild weiter zu senken, indem Signaleinträge benachbarter Bildelemente mit einander verrechnet werden. Hier kann nur ein Filter, aber auch eine Mehrzahl von Filtern, bspw. zwei Filter zum Einsatz kommen. Mögliche Filter sind gängige Mittelwertfilter und/oder ein Gaußfilter. Das gefilterte Differenzbild wird in den Schritten S22 und S23 zur Bestimmung von Bildbereichen mit Signalwert oberhalb bzw. unterhalb eines Schwellwertes heran gezogen, wie bereits in Bezug auf Schritte S12 und S13 beschrieben. In einem Schritt S241 werden nun für einen Bildbereich mit Signalwert unterhalb des Schwellwertes erster und zweiter Signalwert entsprechend einem Mittelungsparameter gemittelt, der im Hinblick auf eine maximale Rauschunterdrückung gewählt wird. Mit anderen Worten werden die ersten und zweiten Signalwerte Bildelement-weise derart gewichtet, dass das gefilterte Ergebnisbild ein optimales und insofern kleinstmögliches Rauschen aufweist. Der Mittelungsparameter ist als freier Parameter ausgebildet. Er wird bevorzugt so gewählt bzw. eingestellt, dass der zweite Signalwert im Gegensatz zum ersten Signalwert verstärkt in die Mittelung eingeht. Schritt S241 kann für verschiedene Bildbereiche mit Signalwert unterhalb des Schwellwertes wiederholt werden. In einem Schritt S242 werden für einen Bildbereich mit Signalwert oberhalb des Schwellwertes erster und zweiter Signalwert entsprechend einem Produkt aus Mittelungsparameter und einer Gewichtungsfunktion gemittelt. Die Gewichtungsfunktion ist eine vom lokalen Bildrauschen abhängige Funktion. Diese manipuliert durch Produktbildung den Mittelungsparameter derart, dass in diesem Bildbereich der erste Signalwert verstärkt in die Mittelung eingeht. In einer besonders bevorzugten Ausführung bewirkt die Gewichtungsfunktion, dass der zweite Signalwert bei der Mittelung unberücksichtigt bleibt. In dieser Ausführung geht der erste Signalwert unverändert in das gefilterte Ergebnisbild ein. Das gefilterte Ergebnisbild wird durch die entsprechend den verschiedenen Bildbereichen gemittelten Signalwerte aufgebaut.

Das lokale Bildrauschen wird in diesem Ausführungsbeispiel in einer 3 x 3 Umgebung des zentralen Bildelements bestimmt. Jede Richtung umfasst also das zentrale Bildelement und zwei direkte Nachbarn. Dabei wird hier entlang von vier Richtungen (für ein zweidimensionales Bild, neun für ein dreidimensionales Bild) die Standardabweichung der Pixelwerte bestimmt. Danach wird das Minimum der vier resultierenden Standardabweichungen berechnet. Dieser Wert dient als Abschätzung für das lokale Bildrauschen in Bezug auf das zentrale Bildelement. Falls in der Umgebung dieses Bildelements eine Objektkante liegt, wird deren verfälschender Einfluss auf das berechnete lokale Bildrauschen reduziert.

In einer weiteren Ausführungsform wird, da das Minimum der Standardabweichung entlang der verschiedenen Richtungen als Schätzwert für das lokale Bildrauschen genommen wird, das lokale Bildrauschen bevorzugt parallel zu Objektkanten ausgewertet, sprich, zur Berechnung der Standardabweichung werden nur Richtungen betrachtet, die nicht eine Objektkante schneiden. Es sei nochmals darauf hingewiesen, dass die Verwendung einen 3 x 3 Umgebung nur beispielhaft ist, es muss auch nicht jedes Bildelement entlang einer gegebenen Richtung in die Berechnung der Standardabweichung eingehen. Es kann vorteilhaft sein bspw. nur jeden zweiten Pixel in die Berechnung mit einzubeziehen um z.B. den Einfluss der räumlichen Rauschkorrelation auf den Wert der Standardabweichung zu reduzieren. Dies ist insbesondere für die Computertomographie-Bildgebung relevant, da dort das Bildrauschen immer räumlich korreliert.

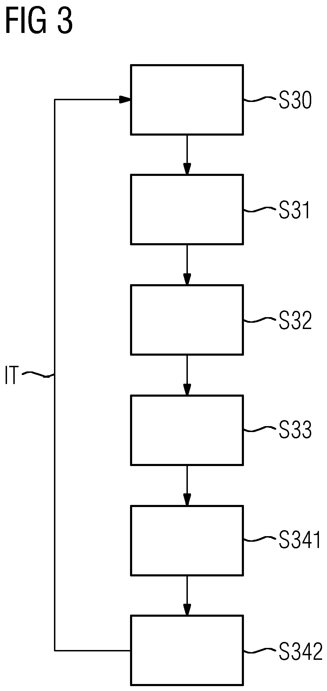

**Figur** 3 zeigt eine schematische Darstellung eines weiteren Ausführungsbeispiels des erfindungsgemäßen Verfahrens. Dieses Ausführungsbeispiel ist besonders geeignet zur Anwendung auf Rohbilder, die im Rahmen einer medizinischen Untersuchung zeitlich versetzt erfasst werden, es ist aber nicht darauf beschränkt. Dieses Ausführungsbeispiel entspricht einer iterativen Ausführung des erfindungsgemäßen Verfahrens, wobei die Schritte S30 bis S342 für jedes im Rahmen einer Untersuchung erfasste Rohbild durchlaufen werden. Insbesondere wird für jedes Rohbild, auch Frame genannt, ein gefiltertes Ergebnisbild gemäß den Schritten S30 bis S342 gebildet. Die Iteration wird durch die Schleife IT repräsentiert. Für jede Iteration wird dabei ein anderes Rohbildpaar berücksichtigt, wobei die Rohbilder direkt benachbart zueinander erfasst wurden, bspw. das dritte und vierte, das vierte und fünfte, das fünfte und sechste Rohbild der Untersuchung, usw. Die einzelnen Schritte S30 bis S33 zur Bestimmung eines Differenzbildes und zur Identifikation von Bildbereichen mit Signalwert unter- bzw. oberhalb eines Schwellwertes entsprechen jeweils einem der Schritte S10 bis S13 bzw. S20 bis S23 der vorherigen Ausführungen gemäß Figur 1 oder Figur 2. Die Schritte S341 und S342 betreffen jeweils eine bereichsweise Mittelung von ersten und zweiten Signalwerten, wie es auch in Bezug zu Figur 2 schon näher beschrieben ist. Ferner ist in diesem Ausführungsbeispiel vorgesehen, dass der zweite bei der Mittelung zum Einsatz kommende Signalwert basierend auf dem gefilterten Ergebnisbild der vorherigen Iteration gebildet wird. Mit anderen Worten wird das gefilterte Ergebnisbild einer Iteration zur Bestimmung des zweiten Signalwertes der darauf folgenden Iteration herangezogen. Der zweite Signalwert ergibt sich in dieser Ausführung aus der bereichsweisen Mittelung der zu dem Bildelement korrespondierenden Signalwerte einer vorherigen Iteration. Das gefilterte Ergebnisbild der vorherigen Iteration liegt bereits vor, sodass der Bildelement-weise Signalwert für die erfindungsgemäße Mittelung lediglich ausgelesen werden muss. Diese Vorgehensweise beschleunigt eine Erzeugung eines rauschreduzierten Ergebnisbildes, derart, dass nach jeder Bilderfassung im Wesentlichen instantan, also in Echtzeit ein korrigiertes Bild angezeigt werden kann. Die Iterierung der beschriebenen Verfahrensschritte wird in Figur 3 durch die Iterationsschleife IT verdeutlicht.

Insofern eignet sich das hier beschriebene Verfahren insbesondere für den Einsatz im Rahmen von medizinischen Untersuchungen, bei denen über einen bestimmten Zeitraum hinweg nacheinander mehrmals Bilddaten erfasst werden, wie bspw. eine CT-Fluoroskopie, eine CT-Perfusionsuntersuchung oder eine vierdimensionale Herz-/Thorax-Bildgebung.

Bezüglich Schritt S342 kann vorgesehen sein, dass vor der bereichsweisen Mittelung der Signaleinträge von erstem Rohbild und gefiltertem Ergebnisbild der vorherigen Iteration in einem Bildbereich mit Signalwert oberhalb des Schwellwertes das erste Rohbild zuvor kantenerhaltend gefiltert wird. Dies bewirkt vorteilhaft eine Angleichung der Rauschniveaus der in die Mittelung eingehenden Rohbilder. Die Parametrierung des Filters kann dabei auf eine optimale Anpassung des Rauschens im ersten Rohbild an das gefilterte Ergebnisbild ausgerichtet und von Iteration zu Iteration modifiziert werden.

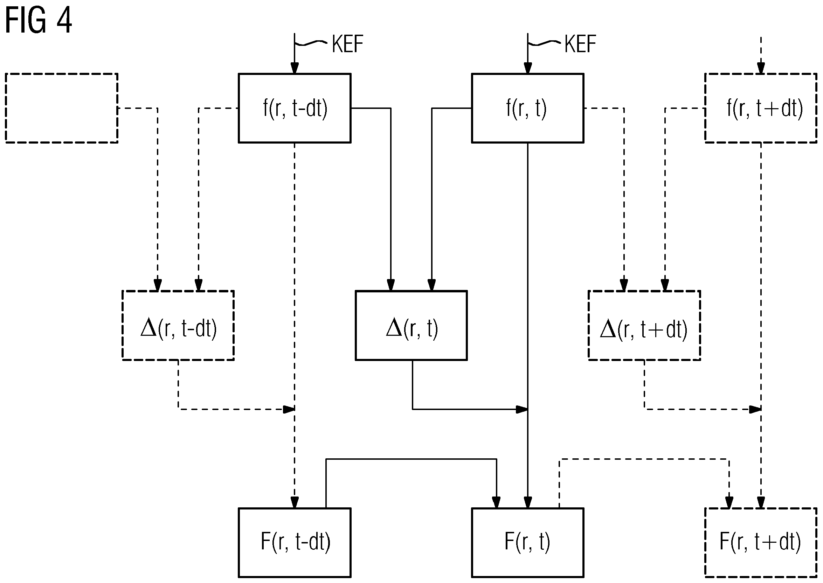

Das iterativ ausgeführte erfindungsgemäße Verfahren gemäß Figur 3 sei nun weiter mit Bezug zu **Figur 4** beschrieben.

Einzelne Rohbilder in Form von Time Frames werden durch $f(\boldsymbol{r},t)$, $f(\boldsymbol{r},t-dt)$, $f(\boldsymbol{r},t+dt)$ gekennzeichnet. Diese seien insbesondere im Rahmen einer vierdimensionalen Untersuchung erfasst. $f(\boldsymbol{r},t)$ steht für das erfindungsgemäße erste Rohbild, das zum Zeitpunkt $t$ erfasst wurde, $f(\boldsymbol{r},t-dt)$ für das direkt zuvor erfasste Rohbild, also das zweite Rohbild und $f(\boldsymbol{r},t+dt)$ für das direkt nach dem ersten Rohbild erfasste Rohbild. Die Rohbilder weisen hier einen zeitlichen Abstand $dt$ auf, dieser kann, muss aber nicht zwischen den Rohbildern äquidistant sein. Der Vektor r repräsentiert die Position eines Bildelements in einem Rohbild und weist entsprechend drei Raumdimensionen x, y, z auf.

Zunächst wird im Rahmen der aktuellen Iteration des erfindungsgemäßen Verfahrens, also nach Erfassen des ersten Rohbildes $f(\boldsymbol{r},t)$ gemäß

$$\Delta(\boldsymbol{r},t) = F_1 |F_2(KEF\, f(\boldsymbol{r},t-dt) - KEF\, f(\boldsymbol{r},t))| \qquad (1)$$

ein Differenzbild $\Delta(\boldsymbol{r},t)$ errechnet. Das Differenzbild $\Delta(\boldsymbol{r},t)$ sollte nur maßgeblich an Positionen r von null abweichen, an denen zwischen $f(\boldsymbol{r},t-dt)$ und $f(\boldsymbol{r},t)$ klinisch relevante Änderungen stattgefunden haben. Um dies zu erreichen, wird zur Berechnung von $\Delta(\boldsymbol{r},t)$ vor der Differenzbildung ein kantenerhaltender Filter bzw. Glättungsfilter *KEF* auf die beiden Rohbilder $f(\boldsymbol{r},t-dt)$ und $f(\boldsymbol{r},t)$ angewendet. Hierbei bewirkt der kantenerhaltende Glättungsfilter *KEF* eine Glättung der Rohbilder in homogenen Bildbereichen. Objektkanten, die in den Rohbildern enthalten sind, werden entsprechend der Art der Filterung von der Glättung ausgeschlossen. Somit bleibt Kanteninformation in den einzelnen Rohbildern $f(\boldsymbol{r},t-dt)$ und $f(\boldsymbol{r},t)$ erhalten. Dies ist wichtig, da das Differenzbild $\Delta(\boldsymbol{r},t)$ im Folgenden zur Detektion von Unterschieden zwischen den Rohbildern verwendet wird. Würde an Stelle des kantenerhaltenden Glättungsfilters *KEF* bspw. ein linearer Glättungsfilter verwendet werden, könnten bspw. Objektbewegungen, die sich vor allem durch unterschiedliche Lagen der Objektkanten in $f(r, t- dt)$ und $f(r,t)$ auszeichnen, im Differenzbild $\Delta(r,t)$ verschwinden.

Die beiden Bildfilter $F_1$ und $F_2$ sind optional und frei wählbar, bspw. als Mittelwert- oder Gaußfilter. Sie können eingesetzt werden, um den Einfluss von Bildrauschen im Differenzbild $\Delta(r,t)$ weiter zu verringern.

Im Folgenden erfolgt ein Identifizieren eines Bildbereichs mit Signalwert oberhalb und unterhalb eines vorab definierten Schwellwerts $S(r,t)$ durch Bestimmung eines Templatebildes $t(r,t)$. Dazu erfolgt ein Bildelemente-weiser Vergleich von Signaleinträgen und Schwellwert $S(r,t)$ gemäß

$$T(\boldsymbol{r},t) = \begin{cases} 1 & f\ddot{u}r \; \Delta(\boldsymbol{r},t) \leq C \cdot \sigma(\boldsymbol{r},t) \\ 0 & sonst \end{cases} \qquad (2)$$

Dabei ist $S(r,t) = C{\cdot}\sigma(r,t)$, wobei $\sigma(r,t)$ für das lokale Bildrauschen des ersten Rohbildes f$(r,t)$ und $C$ für einen lediglich optionalen, freien Skalierungsfaktor steht, der eingeführt und gewählt werden kann, um den Schwellwert $S(r, t)$ an bspw. die Bildgebungsanlage, die Untersuchungsart oder dergleichen der Untersuchung anzupassen. Das Templatebild T$(r,t)$ wird also durch Schwellwertbildung aus dem Differenzbild $\Delta(r,t)$ zweier aufeinanderfolgender Rohbilder $f(r,t - dt)$ und $f(r,t)$ bestimmt. Es zeigt in dieser Ausführung binär die Bildbereiche mit Signaleinträgen ober- und unterhalb des Schwellwertes $S(r,t)$ an.

Die Erzeugung eines gefilterten Ergebnisbildes $F(r,t)$ mit reduziertem Rauschen zum aktuellen Iterationsschritt bzw. zum ersten Rohbild $f(r,t)$ bzw. zum Zeitpunkt $t$ erfolgt durch eine bereichsweise Mittelung zwischen dem ersten Rohbild $f(r,t)$ und dem gefilterten Ergebnisbild $F(r,t- dt)$ der vorherigen Iteration bzw. des vorherigen Zeitschritt $t - dt$ gemäß

$$\begin{aligned} &F(\boldsymbol{r},t) \\ &= \begin{cases} w \cdot F(\boldsymbol{r}, t - dt) + (1-w) \cdot f(\boldsymbol{r},t) & \\ & f\ddot{u}r \; T(\boldsymbol{r},t) = 1 \\ w \cdot \widehat{W}\big(\Delta(\boldsymbol{r},t),\sigma(\boldsymbol{r},t)\big) \cdot F(\boldsymbol{r},t - dt) + \Big(1 - w \cdot \widehat{W}\big(\Delta(\boldsymbol{r},t),\sigma(\boldsymbol{r},t)\big)\Big) \cdot \boldsymbol{KEF}\, f(\boldsymbol{r},t) & \\ & f\ddot{u}r \; T(\boldsymbol{r},t) = 0 \end{cases} \end{aligned} \qquad (3)$$

mit

$$F(\boldsymbol{r}, t = 0) = f(\boldsymbol{r}, t = 0).$$

Die Mittelung gemäß Gleichung (3) ist abhängig von dem Wert des Templatebildes T$(r,t)$. Bildbereiche mit T$(r, t) = 1$, also Bereiche, in denen die Veränderungen zwischen den Rohbildern im Wesentlichen im lokalen Bildrauschen untergehen, werden mit dem gefilterten Ergebnisbild $F(r,t - dt)$ unter Anwendung des freien Mittelungsparameters $w$, $0{\leq}w{\leq}1$ gewichtet. Bildbereiche mit T$(r,t) = 1$, also Bereiche mit klinisch relevanten Veränderungen zwischen den Rohbildern außerhalb des lokalen Bildrauschens werden unter Anwendung einer Gewichtungsfunktion

$$\widehat{W}\big(\Delta(\boldsymbol{r},t),\sigma(\boldsymbol{r},t)\big) \; \texttt{mit} \; \big(w \cdot \widehat{W}\big(\Delta(\boldsymbol{r},t),\sigma(\boldsymbol{r},t)\big) \leq w$$

weniger stark mit dem gefilterten Ergebnisbild $F(r,t - dt)$ gemittelt, d.h. hier ist der Anteil des aktuellen Time Frames bzw. des ersten Rohbildes $f(r,t)$ an der dem gefilterten Ergebnisbild $F(r,t)$ größer.

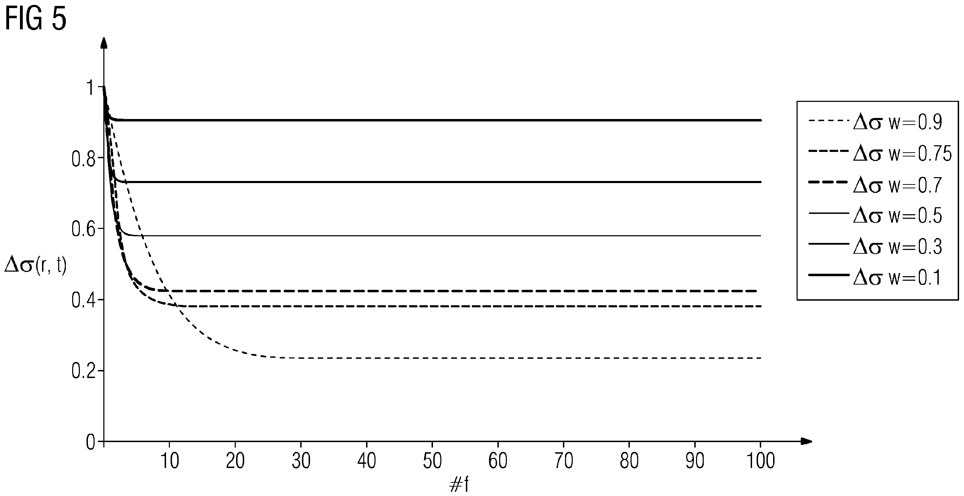

Hintergrund dieses Vorgehens ist die Annahme, dass kleine Unterschiede ($\Delta(r,t) \leq C\,\sigma(r,t)$) zwischen $f(r,t - dt)$ und $f(r,t)$ vor allem durch Unterschiede im Rauschen hervorgerufen werden, größere Differenzen ($\Delta(r,t) > C\,\sigma(r,t)$) aber hauptsächlich durch klinisch relevante Änderungen zwischen $f(r,t- dt)$ und $f(r,t)$, wie zum Beispiel Patientenbewegung, Veränderung der Lage von Interventionsmaterial oder die Veränderung von Kontrasten bei Perfusionsuntersuchungen. Der Mittelungsparameter $w$ ist der freie Parameter der Mittelung zwischen $F(r,t-dt))$ und $f(r,t)$ für den Fall T$(r,t) = 1$. Der Mittelungsparameter $w$ kann wie Skalierungsfaktor $C$ unter Berücksichtigung bspw. der Bildgebungsanlage, der Untersuchungsart oder dergleichen gewählt werden und bestimmt die maximal mögliche Rauschreduktion in dem gefilterten Ergebnisbild $F(r,t)$ gegenüber dem ersten Rohbild $f(r,t)$, wie weiter unten mit Bezug zu **Figur 5** näher erläutert wird.

Für Bildbereiche mit T$(r,t) = 0$, d.h. für $\Delta(r,t) > C\,\sigma(r,t)$ und somit starken Änderungen der Signalwerte ein und desselben Bildelements zwischen $f(r,t - dt)$ und $f(r,t)$, soll die Mittelung zwischen $F(r,t - dt))$ und $f(r,t)$ reduziert werden, bzw. es soll keine Mittelung erfolgen, sondern $f(r,t)$ direkt in $f(r,t)$ eingesetzt werden. Dies wird in Gleichung (3) über die

Gewichtungsfunktion

$$\widehat{W}\big(\Delta(\boldsymbol{r},t),\sigma(\boldsymbol{r},t)\big)$$

erreicht, die folgende Eigenschaften besitzt

$$0 \leq \widehat{W}\big(\Delta(\boldsymbol{r},t),\sigma(\boldsymbol{r},t)\big) \leq 1$$

$$\widehat{W}\big(\Delta(\boldsymbol{r},t),\sigma(\boldsymbol{r},t)\big) = 1 \qquad f\ddot{u}r\ \Delta(\boldsymbol{r},t) = C \cdot \sigma(\boldsymbol{r},t)$$

und

$$\frac{\partial \widehat{W}\big(\Delta(\boldsymbol{r},t),\sigma(\boldsymbol{r},t)\big)}{\partial \Delta(\boldsymbol{r},t)} \leq 0 \qquad f\ddot{u}r\ \Delta(\boldsymbol{r},t) > C \cdot \sigma(\boldsymbol{r},t)$$

bzw.

$$\frac{\partial \widehat{W}\big(\Delta(\boldsymbol{r},t),\sigma(\boldsymbol{r},t)\big)}{\partial \sigma(\boldsymbol{r},t)} \geq 0 \qquad f\ddot{u}r\ \Delta(\boldsymbol{r},t) > C \cdot \sigma(\boldsymbol{r},t)$$

Für $\Delta(\boldsymbol{r},t) < C \cdot \sigma(\boldsymbol{r},t)$ werden keine Bedingungen an die Gewichtungsfunktion $\hat{W}(\Delta(\boldsymbol{r},t), \sigma(\boldsymbol{r},t))$ gestellt, da hier $T(\boldsymbol{r},t) = 1$ und somit $\hat{W}(\Delta(\boldsymbol{r},t), \sigma(\boldsymbol{r},t))$ keinen Einfluss auf das Ergebnisbild $F(\boldsymbol{r},t)$ hat (siehe Gleichung 3). In einem Ausführungsbeispiel wird die Gewichtungsfunktion $\hat{W}(\Delta(\boldsymbol{r},t), \sigma(\boldsymbol{r},t))$ wie folgt gewählt:

$$\widehat{W}\big(\Delta(\boldsymbol{r},t),\sigma(\boldsymbol{r},t)\big) = e^{-D\big(\Delta(r,t)-C\cdot\sigma(r,t)\big)^{2}}.$$

Hierbei ist $D$ ein freier Parameter, mit dessen Hilfe die Reduzierung des Einflusses von $F(\boldsymbol{r},t - dt)$ im Fall von $\Delta(\boldsymbol{r},t) > C\ \sigma(\boldsymbol{r},t)$ gesteuert werden kann.

Im Fall $T(\boldsymbol{r},t)=0$ wird das gefilterte Ergebnisbild $F(\boldsymbol{r},t)$ nicht mit dem ersten Rohbild $f(\boldsymbol{r},t)$, sondern mit dem kantenerhaltend geglätteten Rohbild **KEF** $f(\boldsymbol{r},t)$, abhängig vom Wert der Gewichtungsfunktion $\hat{W}(\Delta(\boldsymbol{r},t), \sigma(\boldsymbol{r},t))$, gemittelt ($\hat{W}{\neq}0$) oder ersetzt ($\hat{W}{=}0$). Die Parametrierung des kantenerhaltenden Filters *KEF* muss hierbei aber nicht die gleiche sein, wie bei der Berechnung des Differenzbildes $\Delta(\boldsymbol{r},t)$ und die Anwendung des Filters **KEF** ist hier zudem optional, d.h. er kann auch weggelassen werden. Der Vorteil einer Verwendung des Filters **KEF** besteht darin, dass das Bildrauschen im ersten Rohbild $f(\boldsymbol{r},t)$ an das des gefilterten Ergebnisbildes der vorherigen Iteration $F(\boldsymbol{r},t - dt)$ in den Bildbereichen mit $T(\boldsymbol{r},t)=1$ bei gleichzeitiger Erhaltung der Kanteninformation angeglichen werden kann.

Figur 4 verdeutlicht, dass die gefilterten Ergebnisbilder vorheriger und anschließender Iterationen auf analoge Weise, jedoch unter Berücksichtigung eines anderen Rohbildpaares bzw. eines anderen gefilterten Ergebnisbildes erzeugt werden können.

Zusammenfassend sei nochmals erwähnt: Ziel des erfindungsgemäßen Algorithmus ist es, Bildbereiche, die von Rohbild zu Rohbild, bzw. von Time Frame zu Time Frame keine klinisch relevanten Veränderungen (z.B. Patientenbewegung, Positionsänderung von Interventionsmaterial, Änderungen in Kontrastmittelkonzentrationen) zeigen, gemittelt werden. So lässt sich das Bildrauschen in diesen Bildbereichen stark reduzieren, sodass die Bildqualität insbesondere von vierdimensionalen Untersuchungen in Bezug auf das Bildrauschen bei konstanter Strahlendosis verbessert werden kann. Alternativ kann die Dosis bei gleichbleibendem Bildrauschen gegenüber Standardmethoden verringert werden. Bildbereiche, in denen zwischen den einzelnen Time Frames starke Änderungen stattgefunden haben, werden erfindungsgemäß aus dem aktuellsten Time Frame übernommen. Somit wird sichergestellt, dass das gefilterte Ergebnisbild $F(\boldsymbol{r},t)$ jedenfalls die aktuelle, korrekte und klinisch relevante Bildinformation beinhaltet.

**Figur 5** zeigt exemplarisch einerseits die Auswirkungen der Anpassung des freien Mittelungsparameters $w$, $0 \leq w \leq 1$ auf das Bildrauschen $\sigma(\boldsymbol{r},t)$, wobei konkret das theoretische Rauschniveau $\Delta\sigma(\boldsymbol{r},t)$ im gefilterten Ergebnisbild

$F(\mathbf{r},t)$ relativ zum ersten Rohbild $f(\mathbf{r},t)$ bei Anwendung des beschriebenen Algorithmus in Abhängigkeit des Wertes für $w$ aufgetragen ist. Jede der dargestellten Kurven repräsentiert dabei einen anderen Wert für Parameter $w$. Daneben zeigt Figur 5 auch die Abhängigkeit der Rauschreduktion von der Anzahl #$f$ der Rohbilder, die in das gefilterte Ergebnisbild $F(\mathbf{r},t - dt)$ der vorherigen Iteration eingehen. Das Optimum der Rauschreduktion ist

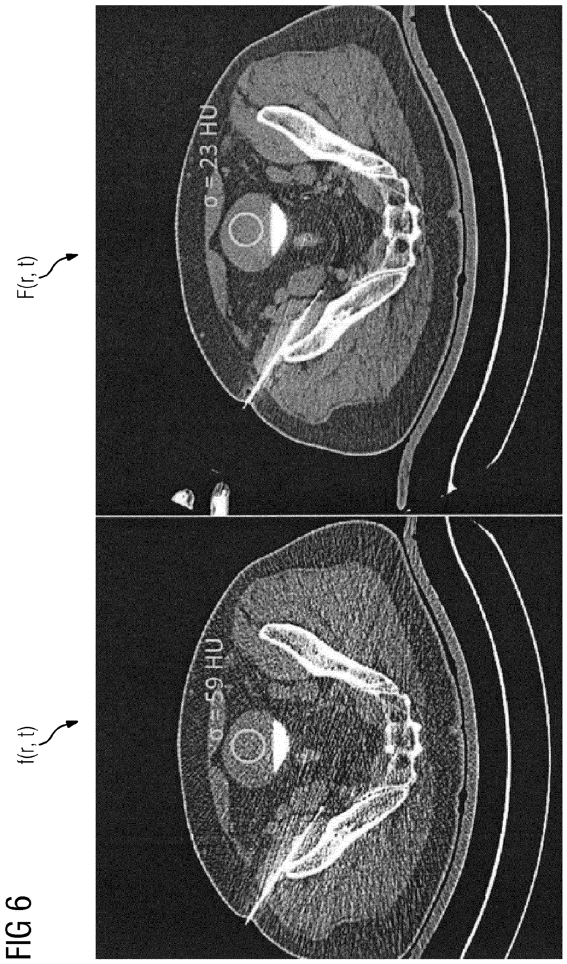

**Figur 6** zeigt links ein originales erstes Rohbild $f(\mathbf{r},t)$ einer vierdimensionalen CT-Untersuchung, konkret einer Biopsie zum Zeitpunkt t. Rechts ist das dazugehörige erfindungsgemäße gefilterte Ergebnisbild $F(\mathbf{r},t)$ zum Zeitpunkt t gezeigt. Der Mittelungsparameter $w$ wurde hier auf 0.75 gesetzt. Das Bildrauschen in der eingezeichneten interessierenden Region (ROI) ist in $F(\mathbf{r},t)$ gegenüber $f(\mathbf{r},t)$ um einen Faktor 0.4 reduziert, mit anderen Worten nur noch 40% des ursprünglichen Rauschens. Außer dem verringerten Rauschen sind in $F(\mathbf{r},t)$ keine Unterschiede gegenüber $f(\mathbf{r},t)$ erkennbar. Der Rauschreduktionsfaktor 0.4 ist nahe dem theoretischen Wert von 0.38 (Figur 5) für $w$ = 0.75.

Durch das erfindungsgemäße Verfahren wird die Bildqualität von medizinischen Abbildungen in Bezug auf Bildrauschen bei konstanter Strahlendosis verbessert. Alternativ kann die Strahlendosis gegenüber Standardmethoden verringert und trotzdem das Bildrauschen auf dem gleichen Level gehalten werden. Hierzu werden erfindungsgemäß einfache Filteralgorithmen geschickt und auf bestimmte Bildbereiche angewandt. Zusätzlich hat der beschriebene Algorithmus den Vorteil, dass im Falle einer vierdimensionalen Bildaufnahmen, bspw. einer CT-Aufnahme nicht erst alle Rohbilder bzw. Time Frames erfasst und rekonstruiert werden müssen, bevor ein rauschreduziertes Bild berechnet zu können. Die Erfindung benötigt nur zwei Rohbilder einer Zeitserie als Eingangsparameter um ein rauschreduziertes Ergebnisbild zu berechnen. Die Erfindung ist nicht auf vierdimensionale Anwendungen oder ein bestimmte Bildgebungsanlage, bspw. die CT beschränkt, sondern kann ganz allgemein zur Rauschreduktion eines Bildes verwendet werden. Voraussetzung sind zusätzliche Bilder (mindestens eines), deren Informationsgehalt sich zumindest teilweise mit dem des betrachteten Bildes überschneidet, d.h. i.W. identisch ist. Das erfindungsgemäße Verfahren ist den bekannten filterbasierten Methoden des Standes der Technik überlegen überlegen, da die einzelnen, rauschreduzierten Time Frames in Echtzeit berechnet werden können. Bei den filterbasierten Methoden muss im Gegensatz dazu die vollständige Bilddatenerfassung und -rekonstruktion abgewartet werden, da die dortige Filterung Information bezüglich aller Time Frames der Untersuchung voraussetzt. Diese Eigenschaft macht eine Nutzung der filterbasierten Methoden z.B. für die Lagekontrolle für Interventionsmaterialien während der Intervention unmöglich.

Das erfindungsgemäße Verfahren ist gegenüber den bekannten iterativen Methoden mit Regularisierung des Stand der Technik insofern überlegen, als dass auch diese Methoden keine Echtzeitberechnung eines einzelnen, rauschreduzierten Ergebnisbildes ermöglichen. Zudem verursacht das erfindungsgemäße Verfahren einen deutlich geringeren Rechenaufwand als die iterativen Methoden mit Regularisierung.

Gegenüber dem auf die Darstellung von Interventionsmaterialien optimierten bekannten Verfahren hat das erfindungsgemäße Verfahren den Vorteil, dass es keine Einschränkung hinsichtlich seiner Anwendbarkeit gibt, es kann insbesondere auf alle vierdimensionalen Bildgebungsverfahren angewendet werden. Zudem zeichnet sich das erfindungsgemäße Verfahren auch hier durch einen deutlich geringeren Rechenaufwand aus.

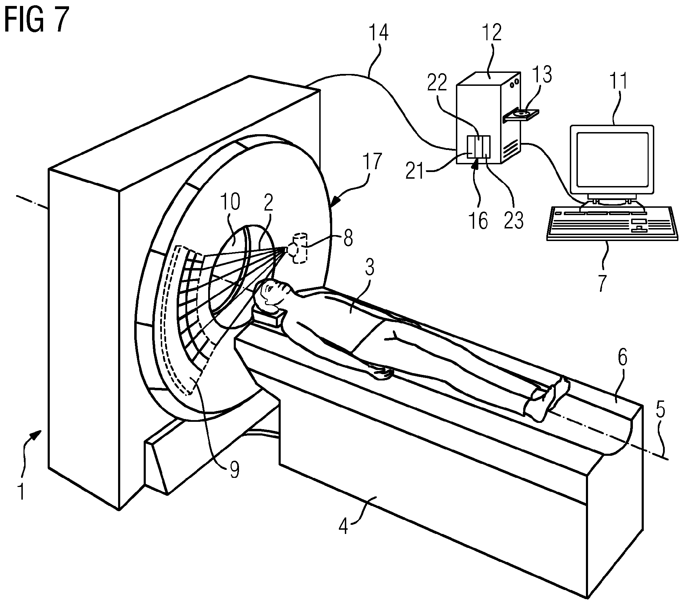

**Figur** 7 zeigt eine medizinische Bildgebungsmodalität 1 in Form eines Computertomographen 1. Der hier gezeigte Computertomograph 1 verfügt über eine Aufnahmeeinheit 17, umfassend eine Röntgenstrahlungsquelle 8 sowie einen Röntgenstrahlungsdetektor 9. Die Aufnahmeeinheit 17 rotiert während der Aufnahme von Röntgenprojektionen um eine Systemachse 5, und die Röntgenquelle 8 emittiert während der Aufnahme Röntgenstrahlen 2.

Ein Patient 3 liegt bei der Aufnahme von Röntgenprojektionen auf einer Patientenliege 6. Die Patientenliege 6 ist so mit einem Liegensockel 4 verbunden, dass er die Patientenliege 6 mit dem Patienten 3 trägt. Die Patientenliege 6 ist dazu ausgelegt, den Patienten 3 entlang einer Aufnahmerichtung durch die Öffnung 10 der Aufnahmeeinheit 17 zu bewegen. Die Aufnahmerichtung ist in der Regel durch die Systemachse 5 gegeben, um die die Aufnahmeeinheit 17 bei der Aufnahme von Röntgenprojektionen rotiert. In diesem Beispiel ist die Körperachse des Patienten 3 gleich der Systemachse 5. Bei einer Spiral-Aufnahme wird die Patientenliege 6 kontinuierlich durch die Öffnung 10 bewegt, während die Aufnahmeeinheit 17 um den Patienten 3 rotiert und Röntgenprojektionen aufnimmt. Damit beschreiben die Röntgenstrahlen 2 auf der Oberfläche des Patienten 3 eine Spirale. Der Patient 3 muss aber bei der Untersuchung nicht bewegt werden. Bei einer PerfusionsUntersuchung bspw. werden jeweils in einem zeitlichen Abstand Projektionen zu derselben Position erzeugt, die dann im zeitlichen Verlauf die Verteilung bzw. Anreicherung von Kontrastmittel in der abgebildeten Körperregion, dem interessierenden Bereich bzw. Körperabschnitt veranschaulichen.

Der Computertomograph 1 verfügt über eine Recheneinheit 12 in Form eines Computers, welcher mit einer Anzeigeeinheit 11, beispielsweise zur graphischen Anzeige, insbesondere Echtzeitanzeige bzw. Quasi-Echtzeit-Anzeige von medizinischen Bildaufnahmen, hier in Form von Computer-Tomographieaufnahmen sowie einer Eingabeeinheit 7 verbunden ist. Bei der Anzeigeeinheit 11 kann es sich beispielsweise um einen LCD-, Plasma- oder OLED-Bildschirm handeln. Es kann sich weiterhin um einen berührungsempfindlichen Bildschirm handeln, welcher auch als Eingabeeinheit 7 ausgebildet ist. Ein solcher berührungsempfindlicher Bildschirm kann in das bildgebende Gerät integriert oder als Teil eines mobilen Geräts ausgebildet sein. Bei der Eingabeeinheit 7 handelt es sich beispielsweise um eine Tastatur, eine Maus, einen sogenannten "Touch-Screen" oder auch um ein Mikrofon zur Spracheingabe. Die Eingabeeinheit 7 kann auch eingerichtet sein, um Bewegungen eines Nutzers zu erkennen und in entsprechende Befehle zu übersetzen. Mittels Eingabeeinheit 7 kann beispielsweise ein Benutzer eine einen Skalierungsfaktor *C* zur Bestimmung eines Schwellwertes für die Identifikation von verschiedenen Bildbereichen oder einen Mittelungsparameter *w* eingeben.

Die Recheneinheit 12 steht mit der drehbaren Aufnahmeeinheit 17 zum Datenaustausch in Verbindung. Über die Verbindung 14 werden einerseits Steuersignale für die Datenakquise vom Computer 12 an die Aufnahmeeinheit 17 übertragen, andererseits können für den Patienten 3 aufgenommene Projektionsdaten für eine Bildrekonstruktion mittels gängiger Rekonstruktionsverfahren an den Computer 12 übertragen werden. Die Verbindung 14 ist in bekannter Weise kabelgebunden oder kabellos realisiert.

Die Recheneinheit 12 in Form des Computers gemäß diesem Ausführungsbeispiel umfasst eine Bild- bzw. Bilddatenverarbeitungseinheit 16. Sie ist insbesondere eingerichtet, alle im Bezug zu dem erfindungsgemäßen Verfahren stehenden Rechenschritte an einem mit der Aufnahmeeinheit 17 aufgenommenen medizinischen Rohbild durchzuführen. Das Rohbild kann jedoch auch von einer anderen medizinischen Bildgebungsanlage der Bildbearbeitungseinheit 16 zur Verfügung gestellt werden und muss nicht direkt zeitlich vor einer Weiterverarbeitung des Bilddatensatzes durch die Recheneinheit 16 erfasst worden sein. Beispielsweise kann der Bilddatensatz über einen mobilen, an sich bekannten computerlesbaren Datenträger, über ein Krankenhaus- oder Radiologieinformationssystem (HIS oder RIS) oder über das Internet auf an sich bekannte Weise der Bilddatenverarbeitungseinheit 16 zugeführt werden.

Die Bilddatenverarbeitungseinheit 16 umfasst für die Ausführung des erfindungsgemäßen Verfahrens eine Differenzbilderzeugungseinheit 21 zum Berechnen eines Differenzbildes aus einem ersten und einem zweiten Rohbild. Differenzbilderzeugungseinheit 21 ist ferner ausgebildet, die einzelnen Rohbilder jeweils zuvor kantenerhaltend zu filtern. Daneben umfasst die Bilddatenverarbeitungseinheit 16 auch eine Identifikationseinheit 23, die eingerichtet ist, verschiedene Bildbereiche in dem Differenzbild zu identifizieren. Daneben umfasst die Bilddatenverarbeitungseinheit 16 auch eine Mittelungseinheit 22, die eingerichtet ist, ein gefiltertes Ergebnisbildes durch bereichsweise Mittelung des ersten Signalwertes des ersten Rohbildes mit einem zweiten Signalwert zu erzeugen. Dazu betrachtet die Mittelungseinheit 22 auf Bildelement-Ebene, also Pixel- oder Voxel-basiert, enthaltene Bildinformation bzw. Signaleinträge und überführt diese anhand der oben beschriebenen Vorschrift für eine Mittelung in einen neuen Signaleintrag für das betrachtete Bildelement. Die Mittelungsvorschrift richtet sich dabei nach dem Bildbereich, dem das betrachtete Bildelement zugeordnet ist.

Die Recheneinheit 12 kann mit einem computerlesbaren Datenträger 13 zusammenwirken, insbesondere um durch ein Computerprogramm mit Programmcode ein erfindungsgemäßes Verfahren durchzuführen. Weiterhin kann das Computerprogramm auf dem maschinenlesbaren Träger abrufbar gespeichert sein. Insbesondere kann es sich bei dem maschinenlesbaren Träger um eine CD, DVD, Blu-Ray Disc, einen Memory-Stick oder eine Festplatte handeln. Die Recheneinheit 12, und damit auch ihre Sub-Komponenten, kann in Form von Hard- oder in Form von Software ausgebildet sein. Beispielsweise ist die Recheneinheit 12 als ein sogenanntes FPGA (Akronym für das englischsprachige "Field Programmable Gate Array") ausgebildet oder umfasst eine arithmetische Logikeinheit. Einzelne oder alle Sub-Komponenten können alternativ dezentral angeordnet sein, z.B. können einzelne Rechenschritte des Verfahrens in einem zentralen Rechenzentrum einer medizinischen Dienstleistungseinrichtung, z.B. ein Krankenhaus, oder in der Cloud ausgeführt werden. Hierbei sind insbesondere Daten- und Patientenschutz beim Datenaustausch zu berücksichtigen.

In der hier gezeigten Ausführungsform ist in einem Speicher der Recheneinheit 12 wenigstens ein Computerprogramm gespeichert, welches alle Verfahrensschritte des erfindungsgemäßen Verfahrens durchführt, wenn das Computerprogramm auf dem Computer 12 ausgeführt wird. Das Computerprogramm zur Ausführung der Verfahrensschritte des erfindungsgemäßen Verfahrens umfasst Programmcode. Weiterhin kann das Computerprogramm als ausführbare Datei ausgebildet sein und/oder auf einem anderen Rechensystem als dem Computer 12 gespeichert sein. Beispielsweise kann der Computertomograph 1 so ausgelegt sein, dass der Computer 12 das Computerprogramm zum Ausführen des erfindungsgemäßen Verfahrens über ein Intranet oder über das Internet in seinen internen Arbeitsspeicher lädt.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

**Patentansprüche**

1. Verfahren zur Erzeugung eines gefilterten Ergebnisbildes ($F(r,t)$) einer interessierenden Körperregion eines Untersuchungsobjektes (3) basierend auf einem mittels medizinischer Bildgebungsmodalität (1) erfassten ersten Rohbild ($f(r,t)$), wobei das erste Rohbild zu einem ersten Zeitpunkt (*t*) innerhalb einer Untersuchung des Untersuchungsobjektes erfasst wird, wobei während der Untersuchung wenigstens zwei Rohbilder ($f(r,t\text{-}dt)$, $f(r,t)$) erfasst werden, mit folgenden Schritten:

- Berechnen (S11; S21; S31) eines Differenzbildes ($\Delta(\boldsymbol{r},t)$) aus dem ersten Rohbild $\boldsymbol{f}(\boldsymbol{r},t)$ und einem innerhalb der Untersuchung direkt benachbart zu dem ersten Rohbild erfassten zweiten Rohbild ($f(\boldsymbol{r},t - dt)$), wobei die Rohbilder jeweils zuvor kantenerhaltend gefiltert werden (S10; S20; S30),
- Identifizieren (S12, S22, S32) wenigstens eines Bildbereichs des Differenzbildes, aufweisend einen Signalwert oberhalb eines vorab definierten Schwellwertes ($S(\boldsymbol{r},t)$),
- Identifizieren (S13; S23; S33) wenigstens eines Bildbereichs des Differenzbildes, aufweisend einen Signalwert unterhalb des Schwellwertes,
- Erzeugen des gefilterten Ergebnisbildes durch bereichsweise Mittelung (S14; S241, S242; S341, S342) des Signalwerts des ersten Rohbildes mit einem zweiten Signalwert basierend auf anderen, im Rahmen der Untersuchung erfassten Rohbildern, wobei die Mittelung den Signalwert des ersten Rohbildes für den Bildbereich mit Signalwert unterhalb des Schwellwertes gegenüber dem zweiten Signalwert unterdrückt und für den Bildbereich mit Signalwert oberhalb des Schwellwerts gegenüber dem zweiten Signalwert verstärkt.

2. Verfahren nach einem der vorherigen Ansprüche, wobei der Schwellwert auf einem lokalen Bildrauschen $\sigma(\boldsymbol{r},t)$ des ersten Rohbildes basiert.

3. Verfahren nach einem der vorherigen Ansprüche, wobei die kantenerhaltende Filterung (**KEF**) der Rohbilder als bilaterale Filterung ausgebildet ist.

4. Verfahren nach einem der vorherigen Ansprüche, wobei das Differenzbild vor dem Identifizieren wenigstens eines Bildbereichs gefiltert wird (S212).

5. Verfahren nach einem der vorherigen Ansprüche, wobei die bereichsweise Mittelung zwischen erstem und zweitem Signalwert für den Bildbereich mit Signalwert unterhalb des Schwellwertes auf einem Mittelungsparameter (*w*) basiert, der entsprechend einer maximalen Rauschunterdrückung für den Bildbereich gewählt wird.

6. Verfahren nach einem der vorherigen Ansprüche, wobei die bereichsweise Mittelung zwischen erstem und zweitem Signalwert für den Bildbereich mit Signalwert oberhalb des Schwellwertes auf einem Produkt aus einem Mittelungsparameter und einer Gewichtungsfunktion ($\hat{W}(\boldsymbol{r},t)$) basiert, wobei

- der Mittelungsparameter entsprechend einer maximalen Rauschunterdrückung für den Bildbereich gewählt wird und
- die Gewichtungsfunktion eine vom lokalen Bildrauschen des ersten Rohbildes abhängige Funktion ist.

7. Verfahren nach einem der vorherigen Ansprüche, wobei der zweite Signalwert durch Mittelung von Signalwerten zeitlich und/oder räumlich vor dem ersten Rohbild erfasster Rohbilder der Untersuchung gebildet wird.

8. Verfahren nach einem der vorherigen Ansprüche, wobei das Verfahren iterativ für jedes erste Rohbild der Untersuchung durchgeführt wird.

9. Verfahren nach Anspruch 8, wobei bei der bereichsweisen Mittelung der k-ten Iteration der zweite Signalwert basierend auf dem gefilterten Ergebnisbild ($F(\boldsymbol{r},t-dt)$) der (k-1)-ten Iteration (IT) gebildet wird.

10. Verfahren nach Anspruch 9, wobei das Erzeugen des gefilterten Ergebnisbildes umfasst, für den wenigstens einen Bildbereich mit Signalwert oberhalb des Schwellwerts das erste Rohbild vor der bereichsweisen Mittelung kantenerhaltend zu filtern.

11. Verfahren nach einem der vorherigen Ansprüche, wobei die Untersuchung eine aus der Gruppe der folgenden Untersuchungen ist: vierdimensionale CT-Fluoroskopie, CT-Perfusionsuntersuchung, dreidimensionale Volumen-CT, vierdimensionale Herz-/Thoraxbildgebung oder dergleichen.

12. Recheneinheit (12) zur Erzeugung eines gefilterten Ergebnisbildes ($F(\boldsymbol{r},t)$) einer interessierenden Körperregion eines Untersuchungsobjektes (3) basierend auf einem mittels medizinischer Bildgebungsmodalität (1) erfassten ersten Rohbild, aufweisend Mittel (13, 16, 21, 22, 23) zum Durchführen eines Verfahrens gemäß einem der Ansprüche 1 bis 11.

13. Medizinische Bildgebungsmodalität (1) mit einer Recheneinheit (12) nach Anspruch 12.

14. Computerprogramm mit Programmcode, um das Verfahren nach einem der Ansprüche 1 bis 12 durchzuführen, wenn das Computerprogramm auf einem Computer ausgeführt wird.

15. Computerlesbarer Datenträger (13) mit Programmcode eines Computerprogramms, um das Verfahren nach einem der Ansprüche 1 bis 11 durchzuführen, wenn das Computerprogramm auf einem Computer ausgeführt wird.

# FIG 1

S10

S11

S12

S13

S14

# FIG 2

S20

S21

S212

S22

S23

S241

S242

FIG 3

S30

S31

S32

S33

S341

S342

IT

FIG 4

FIG 5

EP 3 550 507 A1

## FIG 6

f(r, t)

F(r, t)

FIG 7

Europäisches
Patentamt

European
Patent Office

Office européen
des brevets

**EUROPÄISCHER RECHERCHENBERICHT**

Nummer der Anmeldung

EP 18 16 6068

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2009/202129 A1 (OMI HIROYUKI [JP]) 13. August 2009 (2009-08-13) * Absatz [0034] - Absatz [0061] * ----- | 1-15 | INV. G06T5/00 G06T5/50 |
| Y,D | C. TOMASI; R. MANDUCHI: "Bilateral filtering for gray and color images", PROC. 6TH INT. CONF. COMPUTER VISION, 1998, Seiten 839-846, XP55166574, * Zusammenfassung * ----- | 1-15 | |
| Y | US 6 281 942 B1 (WANG ALBERT S [US]) 28. August 2001 (2001-08-28) * Spalte 9, Zeile 41 - Spalte 10, Zeile 33 * ----- | 1,12-15 | |
| Y | US 5 296 937 A (NAKATANI YOSHINORI [JP] ET AL) 22. März 1994 (1994-03-22) * Spalte 4, Zeile 15 - Spalte 7, Zeile 22 * ----- | 1,12-15 | |
| Y | GERT SCHOONENBERG: "Adaptive spatial-temporal filtering applied to x-ray fluoroscopy angiography", PROCEEDINGS OF SPIE, Bd. 5744, Januar 2005 (2005-01), Seiten 870-878, XP55037512, ISSN: 0277-786X, DOI: 10.1117/12.596535 * Abschnitt 2 * ----- | 1,12-15 | RECHERCHIERTE SACHGEBIETE (IPC) G06T |

Der vorliegende Recherchenbericht wurde für alle Patentansprüche erstellt

| Recherchenort | Abschlußdatum der Recherche | Prüfer |
|---|---|---|
| München | 26. Juli 2018 | Rockinger, Oliver |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 16 6068

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2018

| Im Recherchenbericht angeführtes Patentdokument | Datum der Veröffentlichung | Mitglied(er) der Patentfamilie | Datum der Veröffentlichung |
|---|---|---|---|
| US 2009202129 A1 | 13-08-2009 | JP 5529385 B2<br>JP 2009189440 A<br>US 2009202129 A1<br>US 2012275680 A1 | 25-06-2014<br>27-08-2009<br>13-08-2009<br>01-11-2012 |
| US 6281942 B1 | 28-08-2001 | KEINE | |
| US 5296937 A | 22-03-1994 | JP 3159465 B2<br>JP H04341245 A<br>US 5296937 A | 23-04-2001<br>27-11-1992<br>22-03-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **A. MENDRIK ; E-J VONKEN ; J-W DANKBAAR ; M. PROKOP.** Noise Filtering in Thin Slice 4D Cerebral CT Perfusion Scans. *Proc. SPIE,* 2010, vol. 7623, 76230N-2
- **S. SAWALL ; F. BERGNER ; R. LAPP ; M. MRONZ ; M. KAROLZAK ; A. HESS ; M. KACHELRIEß.** Low-Dose Cardio-Respiratory Phasecorrelated Cone-Beam Micro-CT of Small Animals. *Med. Phys.,* 2011, vol. 38, 1416

- **L. RITSCH ; S. SAWALL ; M. KNAUP ; A. HESS ; M. KACHELRIEß.** Iterative 4D Cardiac Micro-CT Image Reconstruction Using an Adaptive Spatio-Temporal Sparsity Prior. *Phys. Med. Biol.,* 2012, vol. 57, 1517
- **B. FLACH ; J. KUNTZ ; M. BREHM ; R. KUERES ; S. BARTLING ; M. KACHELRIEß.** Low Dose Tomographie Fluoroscopy: 4D Intervention Guidance With Running Prior. *Med. Phys.,* 2013, vol. 40, 101909
- **C. TOMASI ; R. MANDUCHI.** Bilateral filtering for gray and color Images. *Proc. 6th Int. Conf. Computer Vision,* 1998, 839-846